# EUROPEAN PATENT APPLICATION

(11) **EP 1 653 388 A2**
(43) Date of publication of application: **03.05.2006**
(21) Application number: 05021810.6
(22) Date of filing: 06.10.2005
(51) Int. Cl.: G06K 7/00

(54) **Transferring configuration data**

(30) Priority: 01.11.2004 US 979673
(71) Applicant: Hewlett-Packard Development Company, L.P., Houston, TX 77070 (US)
(72) Inventor: Fong, Man Ha, Vancouver, WA 98683 (US)
(74) Representative: Schoppe, Fritz

(57) **Abstract**

A method for transferring configuration data to an electronic appliance (10) includes coupling one of an interrogator (28) and a transponder(26) to a component of the electronic appliance (10). With another of the interrogator (28) and the transponder(26) not coupled to any component of the electronic appliance (10), the interrogator (28) emitting electromagnetic waves and the transponder(26) converting the electromagnetic waves into a power source activating the transponder(26). A wireless link is establishing between the interrogator (28) and the transponder(26); and the configuration data is transferring over the wireless link to the electronic appliance (10).

## Description

### BACKGOUND

Electronic appliances such as computer peripherals, televisions, and video players, can have programs controlling various features as well as configurable attributes for guiding the manner in which the programs control those features. For example, a printer can include firmware that directs the printer's hardware to print a desired image. The printer can also have an attribute, such as the ability to print at a number of different resolutions. Those attributes can be configured with a setting. The firmware then instructs the image to be printed at a resolution indicated by the setting. From time to time, the performance of an electronic appliance can benefit from updating one of its programs or by changing-an attribute setting. Many electronic appliances, however, have no or limited interface capabilities through which program updates or attribute settings can be provided.

### DESCRIPTION OF THE DRAWINGS

Fig. 1 is a block diagram of an exemplary electronic appliance with which various embodiments of the present invention may be implemented.

Fig. 2 is a block diagram illustrating an interrogator and a transponder that can be utilized in various implementations of the present invention

Fig. 3 is an exemplary flow diagram of steps taken to transfer configuration data according to an embodiment of the present invention.

Fig. 4 is a block in which an interrogator of Fig. 2 has been integrated in the electronic appliance of Fig. 1 according to an embodiment of the present invention.

Fig. 5 is an exemplary flow diagram of steps taken to configure an electronic appliance according to an embodiment of the present invention.

Fig. 6 is a block in which a transponder of Fig. 2 has been integrated in the electronic appliance of Fig. 1 according, to an embodiment of the present invention.

Fig. 7 is an exemplary flow diagram of steps taken to configure an electronic appliance according to an embodiment of the present invention.

### DETAILED DESCRIPTION OF THE INVENTION

*INTRODUCTION:* Many electronic appliances include programs that when executed cause the appliance to perform desired tasks. The same electronic appliances can include configurable attributes for guiding the manner in which the programs control those tasks. For example, a printer can include a program that enhances the resolution of a printed image. That same printer may be capable of producing printed images at different resolutions. A setting for such an attribute can specify a particular resolution.

Various embodiments described, below provide for the transfer of configuration data to an electronic appliance. Using the configuration data, the electronic appliance can be configured by updating or replacing one or more of its programs. The appliance can also be configured by changing a setting for one or more of its configurable attributes. Configuration data, then, includes data for upgrading, replacing, or adding program instructions as well as data for specifying settings for configurable attributes.

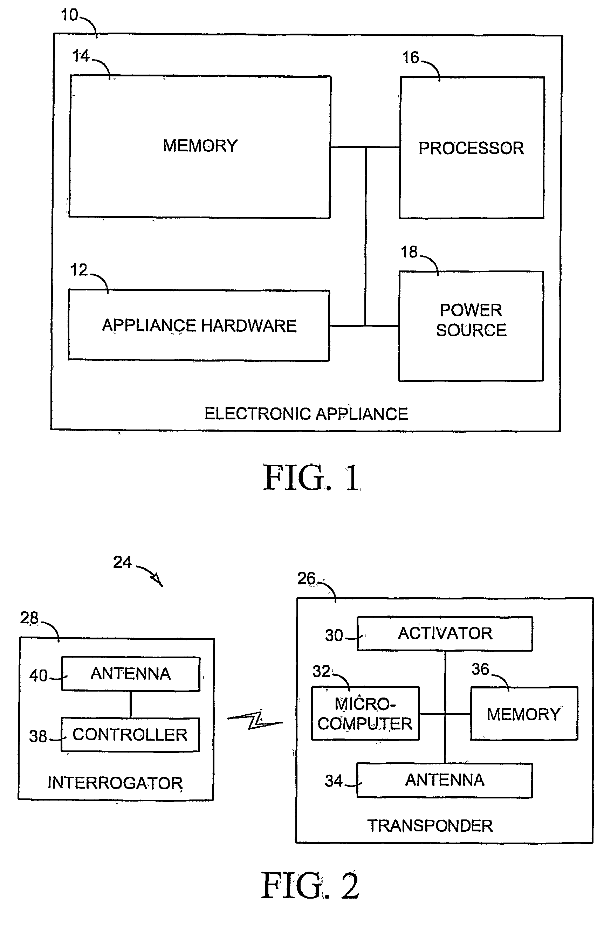

*ELECTRONIC APPLIANCE:* Fig. 1 is a simplified block diagram of a generic electronic appliance 10. Appliance 10 represents generally any electronic device whose operation can be directed by the execution of program instructions. In the example of Fig. 1, appliance 10 includes appliance hardware 12, memory 14, processor 16, and power source 18.

Appliance hardware 12 represents the components responsible for performing the tasks for which the appliance 10 is designed. Where, for example, appliance 10 is a printer, appliance hardware 12 would include the physical components like a toner or ink cartridge and a paper transport system responsible for passing, sheets of paper though the printer while printing images on those sheets of paper. Where, appliance 10 is a television, appliance hardware 12 would include the picture tube, audio amplifier, and speakers.

Memory 14 represents generally any memory capable of storing program instructions for directing the operation of appliance hardware 12, Memory 14 is also responsible for storing data representing attribute settings that dictate the manner in which the program instructions, direct appliance hardware 12. Processor 16 represents generally any processor capable of executing program instructions of memory 14. Power source 18 represents generally any source of eledtrical power for appliance hardware 12, processor 16, and, if needed, memory 14.

While memory 14 is shown as a single block, memory 14 may represent any number of distinct physical memory devices. Similarly, processor 16 may represent any number of distinct processors, and power source 18 may represent any number of distinct power sources.

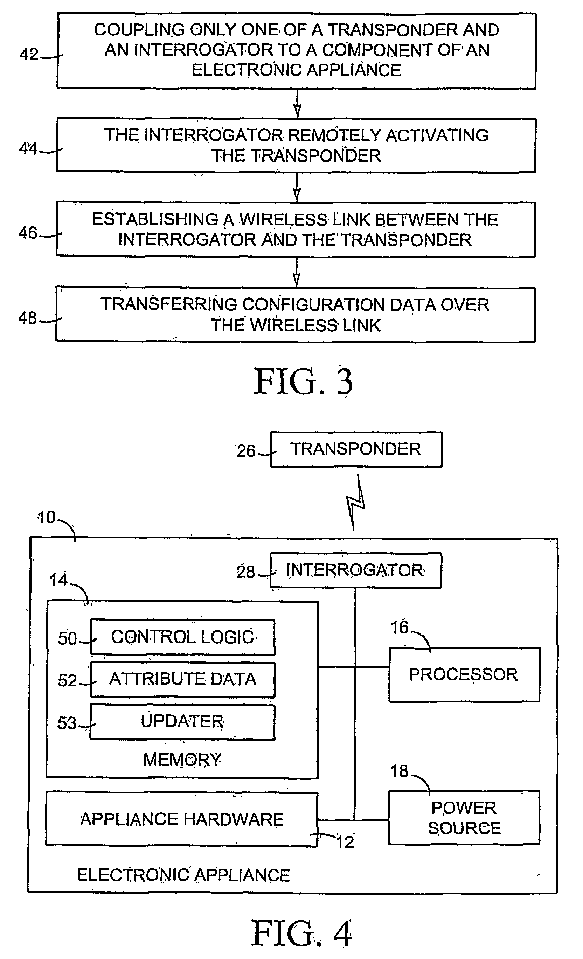

*TRANSFERRING CONFIGURATION DATA:* From time to time the performance of electronic appliance 10 can be improved by updating its program instructions and/or the data representing attribute setting. Fig. 2 is a block diagram of an exemplary RFID (Radio Frequency Identification) system 24 that can be used to transfer configuration data for use by an electronic appliance to make such updates. Fig. 3 is flow diagram of exemplary steps taken to transfer configuration data to an electronic device utilizing RFID system 24.

Starting with Fig. 2, RFID system 24 includes transponder 26 and interrogator 28. Transponder 26 represents a device that can be activated by electromagnetic waves and' can reflect those waves in such a manner that the returned electromagnetic waves carry data. Interrogator 28 represents a device that can emit electromagnetic waves to activate transponder 26 and to receive data carried by the electromagnetic waves reflected back by transponder 26. Interrogator 28 can also send data over electromagnetic waves to program transponder 26.

In the Example of Fig. 2, transponder 26 includes activator 30, microcomputer 32, antenna 34, and memory 36. Activator 30 represents components capable of supplying power to the other components of transponder 26. Activator 30 may be passive. In which case, activator 30 converts the energy from electromagnetic waves emitted by interrogator 28 into a DC (Direct Current) voltage sufficient to serve as a power source for or otherwise activate microcomputer 32. For example, activator 30 may include an antenna (not shown) connected to a rectifier (not shown) that outputs a DC voltage proportional to the electromagnetic wave field strength. Activator 30 may then also include a voltage detector (not shown) that holds microcomputer 32 in a rest condition until the DC voltage rises to a sufficient level. Activator 30 may include a battery (not shown) for powering or aiding in powering microcomputer 32.

Microcomputer 32 represents a processor and programs for utilizing antenna 34 to exchange data via electromagnetic waves with interrogator 28. The data exchange can serve a number of purpose such as establishing a communications link between transponder 26 and interrogator 28, transferring data from transponder 26 to interrogator 28, and allowing interrogator 28 to write data to or, in other words, to program transponder 26.

Memory 36 represents generally any memory capable of storing data that can be transferred to interrogator 28 and/or any memory that can be programmed with data transferred from interrogator 28. More specifically, memory 36 is responsible for storing configuration data. In use, transponder '26 may transfer that configuration data to an interrogator coupled to an electronic appliance. Alternatively, transponder 26 may be coupled to the electronic appliance, and interrogator 28 may transfer the configuration data to transponder 26 to be programmed or written to memory 36. In either case, the configuration data once transferred can be used to configure the electronic appliance.

Continuing with the Example of Fig. 2, interrogator 28 includes communications controller 38 and antenna 40. Communications controller 38 represents generally any combination of hardware and/or programs capable of utilizing antenna 40 to send electromagnetic waves for activating transponder 26, establishing a communication link with transponder 26, receiving configuration data from transponder 26, and/or transferring configuration data to transponder 26 to be written to memory 36.

Exemplary steps take to transfer configuration data to an electronic appliance using RFID system 24 of Fig. 2 are illustrated in Fig. 3. One of transponder 26 and interrogator 28 is coupled to a component of an electronic appliance (step 42). Interrogator 28 remotely activates transponder 26 (step 44). In doing so, interrogator 28 emits electromagnetic waves. Transponder 26 is activated as it converts the energy from the electromagnetic waves to a sufficient DC voltage level. A wireless link is established between interrogator 28 and transponder 26 (step 46). Configuration data is trten transferred to the electronic appliance over the wireless link (step 48).

*INTEGRATED INTERROGATOR:* Fig. 4 is an exemplary block diagram illustrating interrogator 28 integrated within or otherwise coupled to electronic appliance 10. Configuration data is stored by transponder 26 which is not coupled to electronic appliance 10. Memory 14 includes control logic 50, attribute data 52, and updater 53. Control logic 90 represents program instructions, that when executed by Processor 16, direct the operation of appliance hardware 12. Attribute data 52 represents data specifying setting for one or more configurable attributes.

Updater 53 represents program instructions that, when executed by processor 16, utilize configuration data transferred from transponder 26 to interrogator 28 to configure electronic appliance, 10., More specifically, updater 53 is responsible for using the configuration data to update, replace, or add to control logic 50 and to update attribute data 52.

In performing its tasks, updater 53 may be selective. That is, updater 53 may examine the configuration data to determine its relevance and then configure electronic appliance 10 only if the configuration data is determined to be relevant. Relevant configuration data is configuration data that is compatible with electronic appliance 10. To be relevant, configuration data may also be required to be new. For example, the configuration data may include a header that identifies one or more appliance types with which the configuration data is compatible. The header may also identify a program version. Updater 53 examines the header to determine if the configuration data is compatible with electronic appliance 10 and to determine if the configuration data contains an update to a program version that is new with respect to control logic 50 already present in memory 14.

Updater 53 may determine the relevance of the configuration data after it has been transferred to electronic appliance 10. Alternatively, updater 53 may work in conjunction with interrogator 28 to examine the configuration data before it has been entirely transferred to electronic appliance 10. For example, interrogator 28 may retrieve a header from transponder 26 for examination by updater 53. Updater 53 then instructs interrogator 28 to retrieve the remainder of the configuration data only if the examination of the header reveals that the configuration data is relevant.

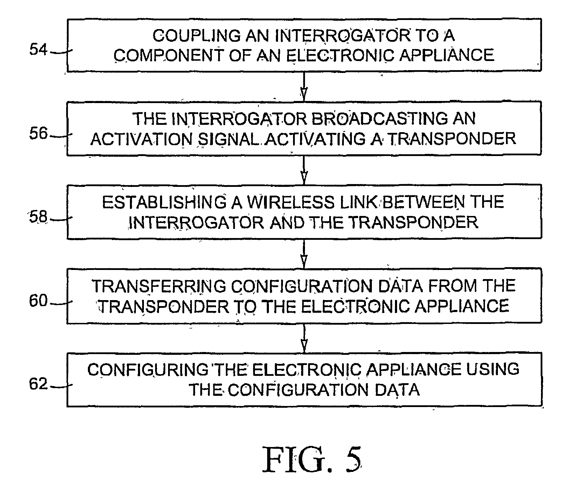

Exemplary steps taken to configure the electronic appliance 10 illustrated in Fig. 4 are now described with reference to Fig. 5. An interrogator 28 is coupled to a component of electronic appliance 10 (step 54). Interrogator 28 remotely activates transponder 26 (step 56). A wireless link is established between interrogator 28 and transponder 26 (step 58). Configuration data is then transferred from transponder 26 to electronic appliance 10 (step 60). Electronic appliance 10 is configured using the configuration data (step 62).

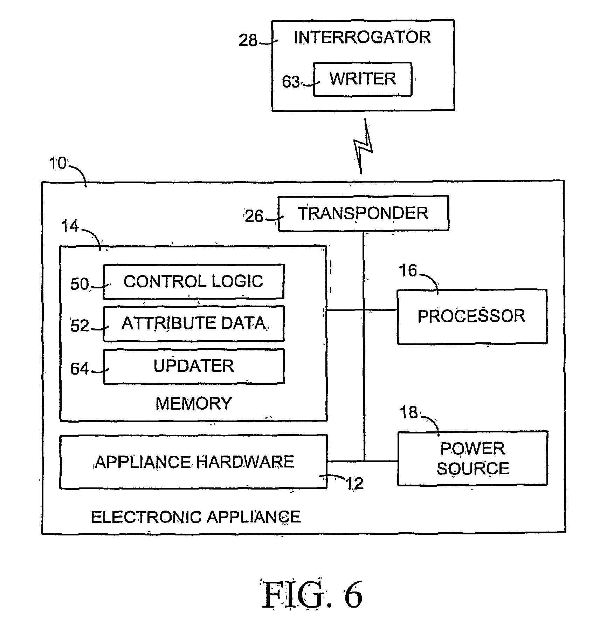

*INTEGRATED TRANSPONDER:* Fig. 6 is an exemplary block diagram illustrating transponder 26 integrated within electronic appliance 10. Configuration data is stored or otherwise accessed by interrogator 28 which is not coupled to electronic appliance 10. Interrogator 28 includes writer 63 which is responsible for programming transponder 26 with the configuration data. Memory 14 includes control logic 50, attribute data 52, and updater 64. Control logic 50 represents program instructions, that when executed by processor 16, direct the operation of appliance hardware 12. Attribute data 52 represents data specifying setting for one or more configurable attributes.

Updater 64 represents, program instructions that, when executed by processor 16, utilize, configuration, data written to transponder 26 to configure electronic appliance 10. More specifically, updater 64 is responsible for using the configuration data to update, replace, or add to control logic 50 and to update attribute data 52.

Because transponder 26 can be powered by electromagnetic waves from interrogator or by its own battery, it can be programmed with configuration data even if electronic appliance 10 is otherwise powered down. For example, electronic appliance 10 may be in a box stored along with any number of other boxed appliances. Interrogator 28 can still remotely activate transponder 26 and program it with configuration data. Once electronic appliance 10 is powered up, updater 64 can access the configuration data from transponder 26 and configure electronic appliance 10.

In performing its tasks, updater 64 may be selective. That is, updater 64 may examine the configuration data to determine its relevance and then configure electronic appliance 10 only if the configuration data is determined to be relevant. For example, the configuration data may include a header that identifies one or more appliance types with which the configuration data is compatible. The header may also identify a program version. Updater 64 examines the header to determine if the configuration data is compatible with electronic appliance 10 and to determine if the configuration data contains an update to a program version that is new with respect.to control logic 50 already present in memory 14.

Writer 63 may, also be selective when programming transponder 26. Transponder 26 may be preprogrammed with a header that identifies electronic appliance 10 and may also identify a program version. Transponder 26, after being activated, returns this header to interrogator 28. In turn, writer 63 examines the header to determine if the configuration data is relevant. If determined to be relevant, writer 63 program transponder 26 with the configuration data.

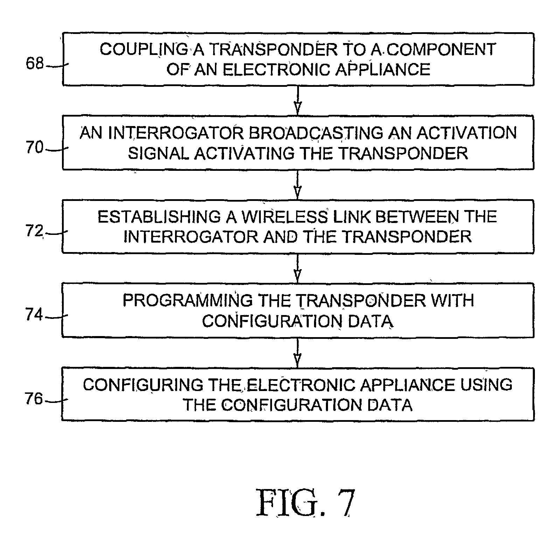

Exemplary steps taken to configure the electronic appliance illustrated in Fig. 6 are now described with reference to Fig. 7. A transponder 26 is coupled to a component of electronic appliance 10 (step 68). Interrogator 28 remotely activates transponder 26 (step 70). A wireless link is established between interrogator 28 and transponder 26 (step 72). Interrogator 28 programs transponder 26 with configuration data (step 74). Electronic appliance 10 is configured using the configuration data (step 76).

*CONCLUSION:* The schematic diagrams of Figs. 1, 2, 4 and 6 illustrate an exemplary electronic appliance in which embodiments of the present invention may be implemented. Implementation, however, is not limited to this electronic appliance. The diagrams of Figs. 2, 4, and 6 show the architecture, functionality, and operation of various embodiments of the present.invention. A number of the blocks are defined as programs. Each of those blocks may represent in whole or in part a module, segment, or portion of code that comprises one or more executable instructions to implement the specified logical function(s). Each block may represent a circuit or a number of interconnected circuits to implement the specified logical function(s). The blocks may represent the physical and/or logical elements of a general purpose computer or a specialized device programmed to implement various embodiments of the invention.

The flow diagrams of Figs. 3, 5, and 7 illustrate logic flows that can be implemented at least in part in discrete circuits, by a,general purpose computer, or by a combination of the two. Although the flow diagrams show specific orders of execution, the orders of execution may differ from that which is depicted. For example, the order of execution of two or more blocks may be scrambled relative to the order shown. Also, two or more blocks shown in succession may be executed concurrently or with partial concurrence. All such variations are within the scope of the present invention.

The present invention has been shown and described with reference to the foregoing exemplary embodiments. It is to be understood, however, that other forms, details and embodiments may be made without departing from the spirit and scope of the invention that is defined in the following claims.

## Claims

1. A method for transferring configuration data to an electronic appliance (10), comprising:
coupling one of an interrogator (28) and a transponder(26) to a component of the electronic appliance (10);
with another of the interrogator (28) and the transponder(26) not coupled to any component of the electronic appliance (10), the interrogator (28) emitting electromagnetic waves and the transponder(26) converting the electromagnetic waves into a power source for activating the transponder(26);
establishing a wireless link between the interrogator (28) and the transponder(26); and
transferring the configuration data over the wireless link to the electronic appliance (10)

2. The method of Claim 1, wherein:
coupling comprises coupling the transponder(26) to the component of the electronic appliance (10); and
transferring comprises the interrogator (28) programming the transponder(26) with the configuration data.

3. The method of Claim 2, further comprising:
determining if the configuration data is relevant; and
utilizing the configuration data to configure the electronic appliance (10) if the configuration data is determined to be relevant.

4. The method of Claim 2, further comprising determining if the configuration data is relevant, and wherein transferring compnses the interrogator (28) programming the transponder(26) with the configuration data if the configuration data is determined to be relevant.

5. The method of Claim 1, wherein:
the transponder(26) is programmed with the configuration data;
coupling compnses coupling the interrogator (28) to the component of the electronic appliance (10), and
transferring comprises the interrogator (28) retrieving the configuration data from the transponder(26).

6. The method of Claim 5, further comprising.
determining if the configuration data is relevant; and
utilizing the configuration data to configure the electronic appliance (10) if the configuration data is determined to be relevant.

7. The method of Claim 5, further comprising determining if the configuration data is relevant and wherein transferring comprises the interrogator (28) retrieving the configuration data from the transponder(26) if the configuration data is determined to be relevant.

8. The method of Claim 1, further comprising utilizing the configuration data to configure the electronic appliance (10).

9. The method of Claim 8, wherein the configuration data is a program update; and wherein utilizing the configuration data comprises updating a program for the electronic appliance (10) using the program update.

10. The method of Claim 8, wherein utilizing the configuration data comprises updating a setting for a configurable attribute of the electronic appliance (10) using the configuration data.

11. A system for transferring configuration data, comprising:
one of an interrogator (28) and a transponder(26) coupled to a component of an electronic appliance (10); and
another of the interrogator (28) and the transponder(26) not coupled to a component of the electronic appliance (10);
wherein the transponder(26) includes an activator, a microcomputer, and an antenna, wherein the activator is configured to convert energy from electromagnetic waves emitted by the interrogator (28) into a power source for activating the microcomputer and the microcomputer is configured to utilize the antenna to establish a wireless link with the interrogator (28); and
wherein the interrogator (28) is configured to cause a transfer of the configuration data over the wireless link.

12. The system of Claim 11, wherein the transponder(26) includes a programmable memory and is coupled to a component of the electronic appliance (10), and wherein the interrogator (28) is configured to program the memory with the configuration data.

13. The system of Claim 12, further comprising program instructions, that when executed, determine if the configuration data is relevant and utilize the configuration data to configure the electronic appliance (10) if the configuration data is determined to be relevant.

14. The system of Claim 12, further comprising program instructions, that when executed, determine if the configuration data is relevant and cause the interrogator (28) to program the transponder(26) with the configuration data if the configuration data is determined to be relevant.

15. The system of Claim 11, wherein the transponder(26) is programmed with the configuration data and the interrogator (28) is coupled to a component of the electronic appliance (10) and configured retrieve the configuration data from the transponder(26).

16. The system of Claim 15, further comprising program instructions, that when executed, determine if the configuration data is relevant and utilize the configuration data to configure the electronic appliance (10) if the configuration data is determined to be relevant.

17. The system of Claim 15, further comprising program instructions, that when executed, determine if the configuration data is relevant and cause the interrogator (28) to retrieve the configuration data from the transponder(26) if the configuration data is determined to be relevant.

18. The system of Claim 11, further comprising program instructions that when executed utilize the configuration data to configure the electronic appliance (10).

19. The system of Claim 18, wherein the configuration data is a program update; and wherein the program instructions, when executed, update a program for the electronic appliance (10) using the program update.

20. The system of Claim 18, wherein the program instructions, when executed, update a setting for a configurable attribute of the electronic appliance (10) using the configuration data.
